# EUROPEAN PATENT APPLICATION

(11) **EP 4 333 497 A1**
(43) Date of publication of application: **06.03.2024**
(21) Application number: 22831345.8
(22) Date of filing: 14.04.2022
(51) Int. Cl.: H04W 28/10

(54) **DATA FLOW TRANSMISSION METHOD AND APPARATUS**

(30) Priority: 30.06.2021 CN 202110745717
(71) Applicant: Huawei Technologies Co., Ltd., Shenzhen, Guangdong 518129 (CN)
(72) Inventor: YANG, Jun, Shenzhen, Guangdong 518129 (CN); WANG, Xuebin, Shenzhen, Guangdong 518129 (CN); ZHANG, Guanhua, Shenzhen, Guangdong 518129 (CN); SU, Min, Shenzhen, Guangdong 518129 (CN)
(74) Representative: Isarpatent
(86) International application number: PCT/CN2022/086774
(87) International publication number: WO 2023/273514

(57) **Abstract**

This application provides a data flow transmission method and transmission apparatus, to help reduce resource overheads of a wireless network and reduce data flow transmission costs. The method includes: A first network element determines a first quality of service QoS flow and a second QoS flow, where the first QoS flow is used to transmit an original flow of service data, and the second QoS flow is used to transmit an error correction flow of the service data. The first network element determines QoS policy information, where the QoS policy information includes a flow identifier of the original flow, a flow identifier of the error correction flow, a service identifier of the original flow, a service identifier of the error correction flow, and QoS indication information, where the QoS indication information indicates a QoS flow corresponding to the original flow to use low QoS, and a QoS flow corresponding to the error correction flow to use high QoS. The first network element transmits the first QoS flow and the second QoS flow on two established transmission paths respectively based on the QoS policy information.

## Description

This application claims priority to Chinese Patent Application No. 202110745717.9, filed with the China National Intellectual Property Administration on June 30, 2021 and entitled "DATA FLOW TRANSMISSION METHOD AND TRANSMISSION APPARATUS", which is incorporated herein by reference in its entirety.

### TECHNICAL FIELD

This application relates to the field of wireless communication, and in particular, to a data flow transmission method and transmission apparatus.

### BACKGROUND

With development of a 5th generation (5th generation, 5G) mobile communication technology, videos gradually evolve from planar high definition to immersive interaction. For example, a user may interact with a virtual environment in extended reality (extended reality, XR) or a real environment in real time by using an interaction device, a gesture, or sensors for various parts of a body, and a server may respond in real time based on user interaction, to provide the user with experience such as high image quality, interaction, and immersion. In XR services, the high image quality of videos, interactive experience, and immersive experience pose high requirements on bandwidth, a latency, a packet error loss rate, and reliability of a network, and this brings great challenges to a wireless network.

Currently, the server and a terminal device may reduce the requirements of the XR services on the wireless network by degrading a part of subjective experience of the user. However, the method is used at the cost of degrading service experience of the user, is not conducive to the experience of the high image quality of videos, the interaction, and the immersion of the user, and limits the long-term development of the XR services.

### SUMMARY

This application provides a data flow transmission method and transmission apparatus, to help reduce resource overheads of a wireless network and reduce data flow transmission costs without degrading service experience of a user.

According to a first aspect, a data flow transmission method is provided. The method includes: A first network element determines a first quality of service (quality of service, QoS) flow and a second QoS flow, where the first QoS flow is used to transmit an original flow of service data, and the second QoS flow is used to transmit an error correction flow of the service data. The first network element determines QoS policy information, where the QoS policy information includes a flow identifier of the original flow, a flow identifier of the error correction flow, a service identifier of the original flow, a service identifier of the error correction flow, and QoS indication information, where the QoS indication information indicates a QoS flow corresponding to the original flow to use low QoS, and a QoS flow corresponding to the error correction flow to use high QoS. The first network element transmits the first QoS flow and the second QoS flow on two established transmission paths respectively based on the QoS policy information.

The first network element may be a wireless acceleration gateway, an application function (application function, AF), or a UPF. The wireless acceleration gateway may be a multi-access edge platform (multi-access edge platform, MEP) or a hybrid access gateway (hybrid access gateway, HAG). The AF may be a server 101 in a communication system 100, or may be at least one of a third-party application of over the top (OTT) or an operator.

The error correction flow may include at least one of original data, to-be-retransmitted data, or redundant data. In different scenarios, content transmitted by the error correction flow may be different. For example, in an ultra-reliable and low-latency communications (ultra-reliable and low-latency communications, URLLC) scenario, the original data may be directly transmitted by the error correction flow, or the original data and the redundant data may be transmitted by the error correction flow. In a real-time broadband communication (real-time broadband communication, RTBC)/uplink centric broadband communication (uplink centric broadband communication, UCBC) scenario, the to-be-retransmitted data and the redundant data may be transmitted by the error correction flow.

The flow identifier may be used to distinguish between different data flows. The flow identifier may be at least one of a flow 5-tuple, a flow 4-tuple, or a flow 7-tuple. The flow identifier of the original flow and the flow identifier of the error correction flow may be used to distinguish between the original flow and the error correction flow.

The service identifier of the original flow may be used to identify a service to which the original flow belongs. Correspondingly, the service identifier of the error correction flow may be used to identify a service to which the error correction flow belongs. If the service identifier of the original flow is the same as the service identifier of the error correction flow, it may indicate that the original flow and the error correction flow belong to a same service.

The first QoS flow transmits the original flow of the service data, and the second QoS flow transmits the error correction flow of the service data. The first network element may use the low QoS for the first QoS flow, and use the high QoS for the second QoS flow based on the QoS indication information.

According to the data flow transmission method provided in this embodiment of this application, data flows of the service data are divided into the original flow and the error correction flow for separate transmission, so that latency reliability of data flow transmission can be improved, and dependency on a codec chip can be reduced. In addition, differentiated QoS indication information is used in a transmission process, the low QoS is used for the QoS flow corresponding to the original flow, and a wireless network does not need to use a high priority as a guarantee. This helps reduce resource overheads of the wireless network and reduce data flow transmission costs.

With reference to the first aspect, in some implementations of the first aspect, the first network element is a wireless acceleration gateway, and the method further includes: The first network element receives first indication information from a terminal device or an edge access gateway, where the first indication information indicates the first network element to establish the transmission paths of the first QoS flow and the second QoS flow. The first network element establishes the transmission paths of the first QoS flow and the second QoS flow based on the first indication information, and establishes a connection between the first network element and an application function (application function, AF) network element, where the connection is used to transmit a data flow of the service data after wireless acceleration, and the data flow of the service data includes the original flow and the error correction flow.

The terminal device may include an application (application, APP), a software development kit (software development kit, SDK), an operating system (operating system, OS), a modem (modem), and the like.

Optionally, before the terminal device sends the first indication information to the first network element, the terminal device needs to obtain address information of the first network element. The first network element may be a MEP or a HAG.

The data flow of the service data between the first network element and the terminal device may be transmitted through a UPF and an access network device. The first network element may explicitly or implicitly notify the UPF and the access network device of QoS priority information for split transmission. The access device may be a base station, but this embodiment of this application is not limited thereto.

Optionally, an explicit notification manner is as follows: The first network element may send the QoS policy information to an SMF network element by using a policy information control function (policy control function, PCF) network element. After receiving the QoS policy information, the SMF sends the QoS policy information to the UPF and the access network device.

Optionally, an implicit notification manner is as follows: The first network element sends identifier information to an SMF network element by using a PCF network element, where the identifier information includes the flow identifier of the original flow, the flow identifier of the error correction flow, the service identifier of the original flow, the service identifier of the error correction flow, and a QFI of the data flow of the service data. It should be understood that the data flow of the service data includes the original flow and the error correction flow, that is, the data flow before splitting. After receiving the identifier information, the SMF network element determines the QoS policy information, and delivers the QoS policy information to the UPF and the access network device.

According to the data flow transmission method provided in this embodiment of this application, the wireless acceleration gateway can wirelessly accelerate data flow transmission, improve latency reliability of the data flow transmission, enhance connection stickiness of the wireless acceleration gateway, and open a transmission service-level agreement service.

With reference to the first aspect, in some implementations of the first aspect, the method further includes: The first network element sends the QoS policy information to a session management function (session management function, SMF) network element by using a policy control function (policy control function, PCF) network element.

With reference to the first aspect, in some implementations of the first aspect, the method further includes: The first network element sends identifier information to an SMF network element by using a PCF network element, where the identifier information includes the flow identifier of the original flow, the flow identifier of the error correction flow, the service identifier of the original flow, the service identifier of the error correction flow, and a quality of service flow identifier (QoS Flow ID, QFI) of the data flow of the service data.

With reference to the first aspect, in some implementations of the first aspect, the wireless acceleration gateway is a multi-access edge platform (multi-access edge platform, MEP) or a hybrid access gateway (hybrid access gateway, HAG).

With reference to the first aspect, in some implementations of the first aspect, the first network element is an application function AF network element, and the method further includes: The first network element sends the QoS policy information to an SMF network element by using a PCF network element.

According to the data flow transmission method provided in this embodiment of this application, intrusion into the application of the terminal device is avoided, an AF determines the QoS policy information, and in a split manner, splitting is performed at an internet protocol (internet protocol, IP) layer or a transport layer. In addition, the error correction flow may collaborate with a wireless network for air interface optimization, to improve latency reliability.

With reference to the first aspect, in some implementations of the first aspect, the first network element is a user plane function UPF network element; and that the first network element determines the QoS policy information includes: The first network element receives the QoS policy information from an SMF network element.

According to the data flow transmission method provided in this embodiment of this application, two QoS flows may be established by a wireless tunnel, without depending on a server or the terminal device, so that intrusion into an application can be avoided, and wireless acceleration at a network layer can be implemented. This can improve latency reliability of the data flow transmission and increase an implementation probability.

With reference to the first aspect, in some implementations of the first aspect, the method further includes: The first network element receives a data flow of the service data from a wireless acceleration gateway, where the data flow of the service data includes the first QoS flow and the second QoS flow. The first network element adds a QFI mark of the original flow to the first QoS flow, and adds a QFI mark of the error correction flow to the second QoS flow based on the QoS policy information.

With reference to the first aspect, in some implementations of the first aspect, the QFI of the original flow is an unacknowledged mode UM of a non-guaranteed bit rate nonGBR, and the QFI of the error correction flow is a guaranteed bit rate GBR.

The QFI of the error correction flow may be an acknowledged mode (acknowledged mode, AM) or the unacknowledged mode (unacknowledged mode, UM) of the guaranteed bit rate GBR. This is not limited in this embodiment of this application.

With reference to the first aspect, in some implementations of the first aspect, the first QoS flow and the second QoS flow belong to different network planes or network slices.

With reference to the first aspect, in some implementations of the first aspect, the first QoS flow and the second QoS flow belong to a same network plane or network slice, and belong to different radio bearers.

With reference to the first aspect, in some implementations of the first aspect, the error correction flow includes at least one of original data, to-be-retransmitted data, or redundant data of the service data.

According to a second aspect, a data flow transmission method is provided. The method includes: A terminal device determines a first quality of service QoS flow and a second QoS flow, where the first QoS flow is used to transmit an original flow of service data, and the second QoS flow is used to transmit an error correction flow of the service data. The terminal device determines QoS policy information, where the QoS policy information includes a flow identifier of the original flow, a flow identifier of the error correction flow, a service identifier of the original flow, a service identifier of the error correction flow, and QoS indication information, where the QoS indication information indicates a QoS flow corresponding to the original flow to use low QoS, and a QoS flow corresponding to the error correction flow to use high QoS. The terminal device transmits the first QoS flow and the second QoS flow on two established transmission paths respectively based on the QoS policy information.

According to the data flow transmission method provided in this embodiment of this application, data flows of the service data are divided into the original flow and the error correction flow for separate transmission, so that latency reliability of data flow transmission can be improved, and dependency on a codec chip can be reduced. In addition, differentiated QoS indication information is used in a transmission process, and the low QoS is used for the QoS flow corresponding to the original flow. This helps reduce resource overheads of the terminal device and reduce data flow transmission costs.

With reference to the second aspect, in some implementations of the second aspect, the terminal device is a software development kit SDK or a modem.

According to a third aspect, a data flow transmission apparatus is provided, configured to perform the method in any possible implementation of the first aspect. Specifically, the apparatus includes a module configured to perform the method in any possible implementation of the first aspect.

According to a fourth aspect, a data flow transmission apparatus is provided, configured to perform the method in any possible implementation of the second aspect. Specifically, the apparatus includes a module configured to perform the method in any possible implementation of the second aspect.

According to a fifth aspect, this application provides another data flow transmission apparatus, including a processor. The processor is coupled to a memory, and may be configured to execute instructions in the memory, to implement the method in any possible implementation of the foregoing aspects. Optionally, the apparatus further includes the memory. Optionally, the apparatus further includes a communication interface, and the processor is coupled to the communication interface.

According to a sixth aspect, this application provides a processing apparatus, including a processor and a memory. The processor is configured to read instructions stored in the memory, receive a signal through a receiver, and transmit a signal through a transmitter, to perform the method in any possible implementation of the foregoing aspects.

Optionally, there are one or more processors, and there are one or more memories.

Optionally, the memory and the processor may be integrated together, or the memory and the processor may be separately disposed.

In a specific implementation process, the memory and the processor may be integrated into one chip, or may be disposed on different chips. A type of the memory and a manner in which the memory and the processor are disposed are not limited in this application.

A related data exchange process such as sending indication information may be a process of outputting the indication information from the processor, and receiving capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the foregoing sixth aspect may be a chip, and the processor may be implemented by hardware or software. When the processor is implemented by hardware, the processor may be a logic circuit, an integrated circuit, or the like. When the processor is implemented by software, the processor may be a general-purpose processor, and the processor is implemented by reading software code stored in the memory. The memory may be integrated into the processor, or may be located outside the processor and exist independently.

According to a seventh aspect, this application provides a computer program product. The computer program product includes a computer program (which may also be referred to as code or instructions). When the computer program is run, a computer is enabled to perform the method in any possible implementation of the foregoing aspects.

According to an eighth aspect, this application provides a computer-readable storage medium. The computer-readable storage medium stores a computer program (which may also be referred to as code or instructions). When the computer program is run on a computer, the computer is enabled to perform the method in any possible implementation of the foregoing aspects.

### BRIEF DESCRIPTION OF DRAWINGS

FIG. 1 is a schematic diagram of a communication system;
FIG. 2 is a schematic diagram of a data flow transmission process;
FIG. 3 is a schematic flowchart of a data flow transmission method according to an embodiment of this application;
FIG. 4 is a schematic diagram of a data flow transmission process according to an embodiment of this application;
FIG. 5 is a schematic diagram of another data flow transmission process according to an embodiment of this application;
FIG. 6 is a schematic diagram of still another data flow transmission process according to an embodiment of this application;
FIG. 7 is a schematic block diagram of a data flow transmission apparatus according to an embodiment of this application; and
FIG. 8 is a schematic block diagram of another data flow transmission apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a narrowband internet of things (narrow band internet of things, NB-IoT) system, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system, a new radio (new radio, NR) system, or another evolved communication system. Three application scenarios of the 5G system generally include enhanced mobile broadband (enhanced mobile broadband, eMBB), ultra-reliable and low-latency communications (ultra-reliable and low-latency communications, URLLC), and massive machine type communications (massive machine type communications, mMTC).

A terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, some terminal devices are, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function or another processing device connected to a wireless modem, a vehicle-mounted device, a wearable device, a terminal device in a 5G network, and a terminal device in a future evolved public land mobile network (public land mobile network, PLMN). This is not limited in embodiments of this application.

In addition, in embodiments of this application, the terminal device may alternatively be a terminal device in an internet of things (internet of things, IoT) system. IoT is an important part of future development of information technologies. A main technical feature of the IoT is connecting things to a network by using a communication technology, to implement an intelligent network for human-machine interconnection and thing-thing interconnection.

An access network device in embodiments of this application may be a device that provides a wireless communication function for the terminal device. The access network device may also be referred to as a network device or a wireless access network device, and may be a transmission reception point (transmission reception point, TRP), an evolved NodeB (evolved NodeB, eNB or eNodeB) in an LTE system, a home base station (for example, a home evolved NodeB or a home NodeB, HNB), a baseband unit (baseband unit, BBU), or a wireless controller in a cloud radio access network (cloud radio access network, CRAN) scenario. Alternatively, the access network device may be a relay station, an access point, a vehicle-mounted device, a wearable device, an access network device in a 5G network, an access network device in a future evolved PLMN network, or the like; may be an access point (access point, AP) in a WLAN, a gNB in a new radio (new radio, NR) system, a satellite base station in a satellite communication system, or the like; or may be a device or the like responsible for a base station function in device-to-device (device-to-device, D2D), vehicle-to-everything (vehicle-to-everything, V2X), or machine-to-machine (machine-to-machine, M2M) communication. This is not limited in embodiments of this application.

In a network structure, the access network device may include a central unit (central unit, CU) node, a distributed unit (distributed unit, DU) node, a RAN device including a CU node and a DU node, or a RAN device including a CU control plane node (CU-CP node), a CU user plane node (CU-UP node), and a DU node.

The access network device provides a service for a terminal device in a cell. The terminal device communicates with the access network device corresponding to the cell or another device by using a transmission resource (for example, a frequency domain resource or a spectrum resource) allocated by the access network device. The access network device may be a macro base station (for example, a macro eNB or a macro gNB), or may be a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), or a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

With the development of a 5th generation (5th generation, 5G) mobile communication technology, videos gradually evolve from the planar high definition to the immersive interaction, for example, gradually mature virtual reality (virtual reality, VR), augmented reality (augmented reality, AR), and mixed reality (mixed reality, MR). The VR, the AR, and the MR may be collectively referred to as XR. In an XR scenario, a user may interact with a virtual environment in the XR or a real environment in real time by using an interaction device, a gesture, or sensors for various parts of a body, and a server may respond in real time based on user interaction, to provide the user with experience such as high image quality, interaction, and immersion. In XR services, the high image quality of videos, interactive experience, and immersive experience pose high requirements on bandwidth, a latency, a packet error loss rate, and reliability of a network, and this brings great challenges to a wireless network.

For example, a 360-degree panoramic (VR360) 8K video in the VR scenario is used as an example to describe the great challenges brought by the XR services to the wireless network.

To ensure a sense of reality, interaction, and pleasure provided by the video for a user, when the user turns the head, time for presenting a high-definition field of view (field of view, FOV) image needs to be as short as possible, and generally needs to be 200 milliseconds (ms) or shorter. However, presentation of the high-definition FOV image needs a plurality of steps, including network transmission, decapsulation, tile (tile) combination, decoding, rendering, and displaying. The decoding, the rendering, and the displaying need to consume most time. Therefore, when the user turns the head, synchronous transmission of 12 to 18 tiles needs to be completed within 20 to 30 ms in the high-definition FOV As a result, a burst bit rate of the FOV reaches more than 200 megabits per second (megabits per second, Mbps), the existing wireless network cannot carry the FOV on a large scale, and this brings the great challenges to the wireless network.

Currently, existing 5G releases include Release (release, R) 15, R16, R17, and the like. However, these releases still cannot meet all-round requirements of the XR services on bandwidth, a latency, a packet error loss rate, reliability, and the like of the network.

For example, in R15, for an enhanced mobile broadband (enhanced mobile broadband, eMBB)-type AR application, a non-guaranteed bit rate (non-guaranteed bit rate, nonGBR) quality of service class identifier (quality of service class identifier, QCI) 80 is added. A priority of the QCI 80 is 6.8, a packet delay budget (packet delay budget, PDB) of the QCI 80 is 10 ms, and a packet error loss rate (packet error loss rate, PER) is 10⁻⁵. However, this QCI cannot meet requirements of future services such as a VR game and VR360.

In R16, five guaranteed bit rate (guaranteed bit rate, GBR) QCIs 71 to 74 and 76 are added to support uplink flow services with a reliable latency, such as VR360 and ultra high-definition (ultra high-definition, UHD) videos. However, these QCIs cannot meet requirements of XR downlink interactive services.

In R17, a 5G quality of service identifier (5G quality of service identifier, 5QI) is added for XR game scenarios. A combination of a new value 1 and a new value 3 may support a total uplink and downlink latency within 10 ms, which is an uplink and downlink latency requirement of a sensor data, instructions, or the like. A combination of a new value 4 and a new value 2 may support a total uplink and downlink latency within 20 ms, which is an uplink and downlink latency requirement of a rendering flow or the like.

In general, in a 5G eMBB scenario, the QCI has a bandwidth guarantee in a GBR scenario, but does not have a guarantee of a low latency and a low packet error loss rate in high bandwidth. In a 5G ultra-reliable and low-latency communications (ultra-reliable and low-latency communications, URLLC) scenario, the QCI has a guarantee of the latency and packet error loss rate, but the QCI is mainly used for periodic small flows with a bit rate of 1 kilobit per second (kilobit per second, Kbps) to 1 Mbps. To meet requirements of the XR services for the high bandwidth, the low latency, and the low packet error loss rate, uplink centric broadband communication (uplink centric broadband communication, UCBC) and real-time broadband communication (real-time broadband communication, RTBC) scenarios are added to 5.5G.

In a 5G or 5.5G era, RTBC XR services bring all-round network requirements, including the high bandwidth, the low latency, and the high reliability. However, limited by an effective channel capacity theory, the wireless network cannot meet the requirements in the bandwidth, the latency, and the reliability simultaneously. Theoretically, latency reduction, air interface fluctuation, or reliability improvement may cause a non-linear decrease in an effective channel capacity, and this cannot be resolved by scheduling or increasing a cache. For example, reliability of a 20 ms latency is improved from one 9 to five 9, and a cell capacity may be reduced by 60%. Reliability of a 10 ms latency is improved from one 9 to five 9, and the cell capacity may be reduced by more than 70%.

From the perspective of a radio air interface, optimization means mainly include an acknowledged mode (acknowledged mode, AM) or an unacknowledged mode (unacknowledged mode, UM), a GBR, prescheduling, and super uplink. The AM, the UM, and the GBR are applicable to both uplink and downlink. The prescheduling and the super uplink are applicable only to uplink.

Specifically, the AM and the UM are mainly used to balance packet reliability and the latency. The AM is usually applicable to scenarios such as a control plane scenario and a file transfer scenario, and the latency is high. The UM has no feedback and is applicable to audio and video scenarios, and a packet loss occurs but the latency is low.

The GBR guarantees bandwidth, a latency, and reliability mainly through resource reservation and priority scheduling. When a rate does not exceed a guaranteed flow bit rate (guaranteed flow bit rate, GFBR), the PDB is met at a probability of 98%. If a delay of a packet exceeds the PDB, a delay critical (delay critical) GBR counts a packet loss.

The prescheduling is mainly used in uplink latency optimization scenarios. One resource application request between a terminal device and a base station may be reduced during each round of scheduling, but a scheduling periodicity and a data volume need to be properly configured. Usually, the scheduling periodicity and the data volume need to be configured based on a maximum burst bit rate of a flow, and this wastes resources. If a service transmission periodicity is inconsistent with the prescheduling periodicity or instantaneous bandwidth is insufficient (a priority lower than that of nonGBR), there is no optimization effect.

The super uplink is mainly used to optimize an uplink latency or uplink bandwidth. It implements uplink full-slot sending and reception by adjusting an uplink-downlink slot ratio and dual-band. The optimization means needs support from a terminal, has a requirement on signal strength, and may affect downlink performance.

From the perspective of the foregoing optimization methods of the wireless air interface, each optimization method has a usage constraint, and usually has a constraint on transmission behavior, configuration rationality, or network resources or jitter. If the constraint is not met, benefits are low and overheads are high, or even a negative effect is caused. Considering actual service behavior, complexity of a network environment, and uncertainty of network jitter, it is difficult to greatly improve network reliability by optimizing the latency and reliability only at a wireless network layer.

From the perspective of transmission protocols, for an error correction manner based on an acknowledgment character (acknowledgment character, ACK) and an automatic repeat request (automatic repeat request, ARQ), such as a transmission control protocol (transmission control protocol, TCP) or a quick UDP internet connection (quick UDP internet connection, QUIC), a packet loss can be detected only after three consecutive ACKs are received. Due to the network jitter, an ACK feedback may be delayed or an ACK may even be lost. Therefore, protocols such as TCP and QUIC have poor anti-delay variation performance, slow packet loss detection, and a high transmission tail delay. A user datagram protocol (user datagram protocol, UDP) uses an ACK+negative acknowledgment character (negative acknowledgment NACK) or ACK+ACK hybrid feedback mode. Although the mode is better than TCP or QUIC in terms of anti-delay variation, the transmission tail delay caused by the network jitter cannot be resolved.

In addition, due to microbursts at a transport layer, large instantaneous bandwidth fluctuation of the wireless network, and instability of a wireless channel, a burst packet loss occurs on the wireless network very easily. Retransmission caused by the burst packet loss may also cause the transmission tail delay. In addition, due to transparency of the wireless network, to-be-retransmitted packets at an application layer are queued or even lost at each processing node of the wireless network, and retransmission reliability cannot be ensured.

In conclusion, the all-round requirements of the XR immersive and interactive services for the high bandwidth, the low latency, and the high reliability bring the great challenges to the wireless network. A requirement for high quality of service (quality of service, QoS) of the services in the existing wireless network is costly or difficult to be implemented.

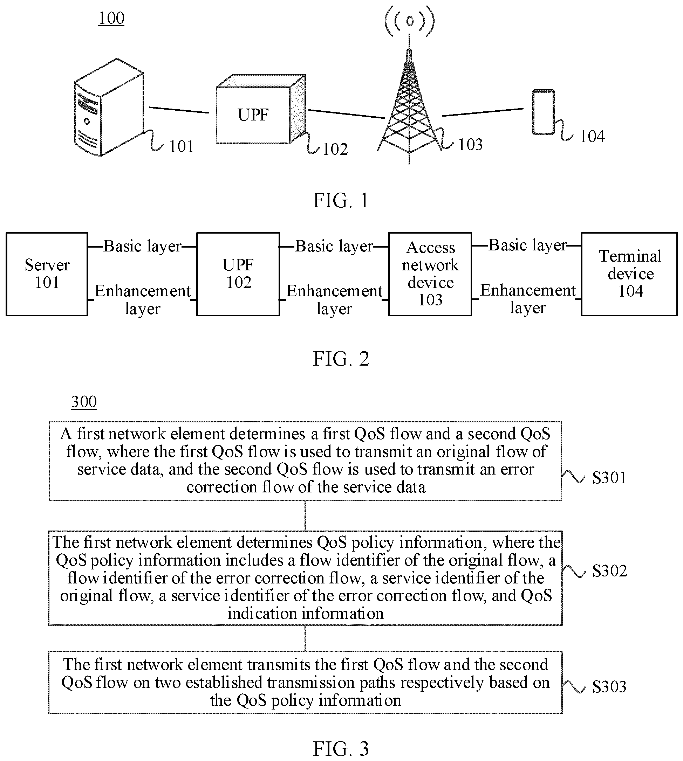

The following first describes in detail a communication system 100 related to the XR services with reference to FIG. 1.

As shown in FIG. 1, the communication system 100 includes a server 101, a user plane function (user plane function, UPF) 102, an access network device 103, and a terminal device 104. In the communication system 100, a user may experience the XR services by using the terminal device 104, and the server 101 may communicate with the terminal device 104 to ensure user experience. In a process in which the user experiences the XR services, a media flow may be transmitted between the server 101 and the terminal device 104.

For example, the server 101 may transmit, to the terminal device 104, a media flow generated by the XR services. Specifically, the server 101 may first transmit the media flow to the UPF 102. After receiving the media flow, the UPF 102 transmits the media flow to the access network device 103. After receiving the media flow, the access network device 103 transmits the media flow to the terminal device 104. After receiving the media flow, the terminal device 104 displays media data.

It should be understood that the terminal device 104 may further transmit a media flow to the server 101. A transmission path of the media flow is opposite to a path of transmitting the media flow from the server 101 to the terminal device 104. Details are not described herein again.

In the communication system 100, the media flow of the XR services has high requirements on bandwidth, a latency, and reliability of a wireless network.

Currently, the server and the terminal device may reduce the requirements of the XR services on the wireless network by degrading a part of subjective experience of the user

For example, FIG. 2 is a schematic diagram of a media flow transmission process. As shown in FIG. 2, the media flow transmitted between the server 101 and the terminal device 104 may be encoded into two flows in a layered encoding manner, where one flow transmits a basic layer, and the other flow transmits an enhancement layer.

The server 101 may encode, in the layered encoding manner, the media flow generated by the XR services into two flows. The server 101 may transmit the basic layer and the enhancement layer to the UPF 102. After receiving the basic layer and the enhancement layer, the UPF 102 transmits the basic layer and the enhancement layer to the access network device 103. After receiving the basic layer and the enhancement layer, the access network device 103 transmits the basic layer and the enhancement layer to the terminal device 104. After receiving the basic layer and the enhancement layer, the terminal device 104 performs subsequent processing on the basic layer and the enhancement layer, for example, decoding, media combination, rendering, and displaying.

It should be understood that the terminal device 104 may further transmit two flows to the server 101. A transmission path of the two flows is opposite to a path of transmitting the two flows from the server 101 to the terminal device 104. Details are not described herein again.

When congestion occurs in the wireless network, the server 101 or the terminal device 104 may choose to transmit only the basic layer or discard the enhancement layer, to ensure that service experience of the user is not degraded significantly. This can ensure image continuity, reduce a packet error loss rate and a latency of the XR services, and reduce requirements on the wireless network.

However, in the transmission process, only 70% of the service experience of the user can be ensured, and the layered encoding manner causes high resource overheads of the wireless network and high transmission costs. The media flow transmission method is used at the cost of degrading the service experience of the user, is not conducive to high image quality of videos, the interaction, and the immersion of the user, and limits the long-term development of the XR services.

In addition, the foregoing manner of encoding the media flow into two flows based on layered encoding has the following disadvantages:
(1) Both the server 101 and the terminal device 104 need to support the layered encoding manner. To be specific, support from two ends of an application layer is needed, and intrusion into the application layer is deep.
(2) In the process of transmitting the media flow between the server 101 and the terminal device 104, acceleration or other processing may be performed by an intermediate node, for example, content delivery network (content delivery network, CDN) nodes at all levels in a conventional file download, video on demand, or live broadcast scenario, and real-time network (real-time network, RTN) nodes at all levels in a real-time communication (real-time communication, RTC) scenario. In this way, a connection between the server 101 and the terminal device 104 may be divided into a plurality of segments. In the manner of encoding the media flow into two flows based on the layered encoding, each segment between the server 101 and the terminal device 104 needs to support dual connectivity. However, a network layer and each intermediate transmission node do not know which connection transmits the basic layer and which connection transmits the enhancement layer. Therefore, the application layer needs to use a specific mechanism to notify the network layer and the intermediate node of a correspondence between a connection, the basic layer, and the enhancement layer, and this causes too much coupling between the application layer and the network layer.
(3) In an existing layered encoding manner such as scaled video coding (scaled video coding, SVC) and fast scaled video coding (scaled video coding, SVC), levels of chips that integrate the function and that are produced by manufacturers are different, and this makes it difficult to implement the solution.

In view of this, embodiments of this application provide a data flow transmission method and transmission apparatus, to help reduce resource overheads of the wireless network and reduce data flow transmission costs without degrading the service experience of the user.

FIG. 3 is a schematic flowchart of a data flow transmission method 300 according to an embodiment of this application. The method 300 may be applied to the communication system 100 shown in FIG. 1, but this embodiment of this application is not limited thereto. As shown in FIG. 3, the method 300 may include the following steps.

S301: A first network element determines a first QoS flow and a second QoS flow, where the first QoS flow is used to transmit an original flow of service data, and the second QoS flow is used to transmit an error correction flow of the service data.

It should be understood that a data flow of the service data includes the original flow of the service data and the error correction flow of the service data. The data flow of the service data may be understood as the foregoing media flow, but this is not limited in this embodiment of this application.

The first network element may be a wireless acceleration gateway, an application function (application function, AF), or a UPF. The wireless acceleration gateway may be a multi-access edge platform (multi-access edge platform, MEP) or a hybrid access gateway (hybrid access gateway, HAG). The AF may be the server 101 in the communication system 100, or may be at least one of a third-party application of over the top (OTT) or an operator.

The error correction flow may include at least one of original data, to-be-retransmitted data, or redundant data. In different scenarios, content transmitted by the error correction flow may be different. For example, in an ultra-reliable and low-latency communications (ultra-reliable and low-latency communications, URLLC) scenario, the original data may be directly transmitted by the error correction flow, or the original data and the redundant data may be transmitted by the error correction flow. In a real-time broadband communication (real-time broadband communication, RTBC)/uplink centric broadband communication (uplink centric broadband communication, UCBC) scenario, the to-be-retransmitted data and the redundant data may be transmitted by the error correction flow.

It should be understood that the first QoS flow may be used to transmit the original flow of the service data, and the second QoS flow may be used to transmit the error correction flow of the service data; or the first QoS flow may be used to transmit the error correction flow of the service data, and the second QoS flow may be used to transmit the original flow of the service data. This is not limited in this embodiment of this application.

Optionally, the first QoS flow and the second QoS flow may belong to different network planes or network slices.

For example, the first QoS flow may belong to an enhanced mobile broadband (enhanced mobile broadband, eMBB) slice, and the second QoS flow may belong to a real-time broadband communication (real-time broadband communication, RTBC) slice.

Optionally, the first QoS flow and the second QoS flow may belong to a same network plane or network slice, and belong to different radio bearers (radio bearers).

Optionally, the first QoS flow and the second QoS flow may use a same internet protocol (internet protocol, IP) port, or may use different IP ports.

S302: The first network element determines QoS policy information, where the QoS policy information includes a flow identifier of the original flow, a flow identifier of the error correction flow, a service identifier of the original flow, a service identifier of the error correction flow, and QoS indication information, where the QoS indication information indicates a QoS flow corresponding to the original flow to use low QoS, and a QoS flow corresponding to the error correction flow to use high QoS.

The flow identifier may be used to distinguish between different data flows. The flow identifier may be at least one of a flow 5-tuple, a flow 4-tuple, or a flow 7-tuple. The flow identifier of the original flow and the flow identifier of the error correction flow may be used to distinguish between the original flow and the error correction flow.

The service identifier of the original flow may be used to identify a service to which the original flow belongs. Correspondingly, the service identifier of the error correction flow may be used to identify a service to which the error correction flow belongs. If the service identifier of the original flow is the same as the service identifier of the error correction flow, it may indicate that the original flow and the error correction flow belong to a same service.

The first QoS flow transmits the original flow of the service data, and the second QoS flow transmits the error correction flow of the service data. The first network element may use the low QoS for the first QoS flow, and use the high QoS for the second QoS flow based on the QoS indication information.

For example, the first network element may determine the QoS policy information based on a QoS requirement of the AF or a terminal device. The QoS requirement may include at least one of a QFI, network bandwidth, a latency, a packet error loss rate, or a burst of the data flow of the service data. The QoS requirement may be sent by the AF or the terminal device to the first network element, or may be sensed by the first network element by sensing the data flow of the service data over a link.

Optionally, a quality of service flow identifier (QoS Flow ID, QFI) of the original flow may be an unacknowledged mode (unacknowledged mode, UM) of a non-guaranteed bit rate (non-guaranteed bit rate, nonGBR), and a QFI of the error correction flow may be an acknowledged mode (acknowledged mode, AM) of a guaranteed bit rate (guaranteed bit rate, GBR).

S303: The first network element transmits the first QoS flow and the second QoS flow on two established transmission paths respectively based on the QoS policy information.

According to the data flow transmission method provided in this embodiment of this application, data flows of the service data are divided into the original flow and the error correction flow for separate transmission, so that latency reliability of data flow transmission can be improved, and dependency on a codec chip can be reduced. In addition, differentiated QoS indication information is used in a transmission process, the low QoS is used for the QoS flow corresponding to the original flow, and a wireless network does not need to use a high priority as a guarantee. This helps reduce resource overheads of the wireless network and reduce data flow transmission costs.

In an optional embodiment, the first network element may be a wireless acceleration gateway. The method 300 further includes: The terminal device or an edge access gateway sends first indication information to the first network element, where the first indication information indicates the first network element to establish the transmission paths of the first QoS flow and the second QoS flow. Correspondingly, the first network element receives the first indication information. The first network element may establish, based on the first indication information, the transmission paths of the first QoS flow and the second QoS flow, and establish a connection between the first network element and an AF network element, where the connection is used to transmit a data flow of the service data after wireless acceleration, and the data flow of the service data includes the original flow of the service data and the error correction flow of the service data.

The terminal device may include an application (application, APP), a software development kit (software development kit, SDK), an operating system (operating system, OS), a modem (modem), and the like. For example, the SDK may send the first indication information to the first network element, and the SDK may also establish the transmission paths of the first QoS flow and the second QoS flow. A data flow is established between the SDK and the APP

Optionally, before the terminal device or the edge access gateway sends the first indication information to the first network element, the terminal device or the edge access gateway needs to obtain address information of the first network element. The first network element may be a MEP or a HAG.

For example, the terminal device and a session management function (session management function, SMF) may obtain, by using non-access stratum (non-access stratum, NAS) signaling, an address of a MEP or a HAG anchored by a UPF. Alternatively, an AF may notify, through application layer negotiation, the terminal device of an address of an anchored MEP or HAG.

The data flow of the service data between the first network element and the terminal device or the edge access gateway may be transmitted through the UPF and the access network device. The first network element may explicitly or implicitly notify the UPF and the access network device of QoS priority information for split transmission. The access device may be a base station, but this embodiment of this application is not limited thereto.

An explicit notification manner is as follows: The first network element may send the QoS policy information to an SMF network element by using a policy control function (policy control function, PCF) network element. After receiving the QoS policy information, the SMF sends the QoS policy information to the UPF and the access network device.

An implicit notification manner is as follows: The first network element sends identifier information to an SMF network element by using a PCF network element, where the identifier information includes the flow identifier of the original flow, the flow identifier of the error correction flow, the service identifier of the original flow, the service identifier of the error correction flow, and a QFI of the data flow of the service data. It should be understood that the data flow of the service data includes the original flow and the error correction flow, that is, the data flow before splitting. After receiving the identifier information, the SMF network element determines the QoS policy information, and delivers the QoS policy information to the UPF and the access network device.

For example, the SMF network element may split the data flow of the service data based on the flow identifier of the original flow and the flow identifier of the error correction flow, to obtain the original flow and the error correction flow, add the service identifier of the original flow to the original flow, and add the service identifier of the error correction flow to the error correction flow. The QFI of the data flow of the service data indicates the SMF to configure a sum of a QFI of the original flow and a QFI of the error correction flow to be no less than the QFI of the data flow of the service data.

It should be understood that a UPF network element may obtain, by receiving the QoS policy information from the SMF network element, the flow identifier of the original flow, the flow identifier of the error correction flow, the service identifier of the original flow, the service identifier of the error correction flow, and the QoS indication information.

It should be understood that the SMF network element, the UPF network element, and the AF network element in embodiments of this application may be referred to as an SMF, an SMF, and an AF for short.

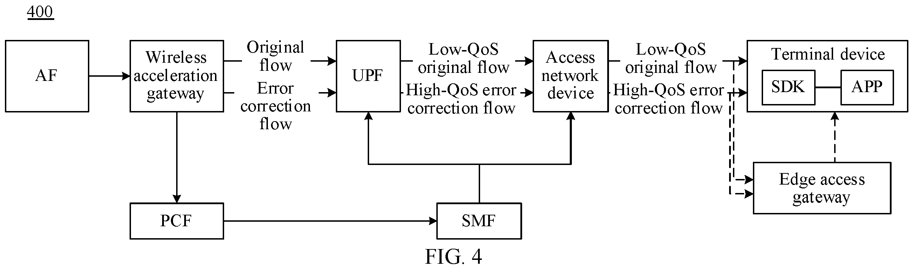

For example, FIG. 4 is a schematic diagram of a data flow transmission process. As shown in FIG. 4, a connection is established between the wireless acceleration gateway and the AF, and may be used to transmit one data flow. Two data flows may be transmitted between the wireless acceleration gateway and the UPF, between the UPF and the access network device, and between the access network device and the SDK in the terminal device. Optionally, if the terminal device is connected to the edge access gateway, one service data flow may be transmitted between the edge access gateway and the terminal device, and two flows may be transmitted between the edge access gateway and the wireless acceleration gateway.

The wireless acceleration gateway may receive a data flow of service data from the AF, and after determining a first QoS flow and a second QoS flow, may transmit an original flow of the service data and an error correction flow of the service data to the UPF based on QoS policy information by using the first QoS flow and the second QoS flow respectively. After receiving the original flow of the service data and the error correction flow of the service data, the UPF may determine, based on a flow identifier of the original flow and a flow identifier of the error correction flow, a QoS flow corresponding to the original flow and a QoS flow corresponding to the error correction flow. Then, the UPF determines, based on a service identifier of the original flow and a service identifier of the error correction flow, whether the original flow and the error correction flow belong to one service. If the original flow and the error correction flow belong to one service, the UPF uses low QoS for the QoS flow corresponding to the original flow and uses high QoS for the QoS flow corresponding to the error correction flow based on QoS indication information. If the original flow and the error correction flow do not belong to one service, the UPF does not execute the QoS indication information.

After using the low QoS for the QoS flow corresponding to the original flow and using the high QoS for the QoS flow corresponding to the error correction flow, the UPF may obtain the low-QoS original flow and the high-QoS error correction flow, and send the low-QoS original flow and the high-QoS error correction flow to the access network device.

For example, the access network device may be a base station. The access network device may receive the low-QoS original flow and the high-QoS error correction flow from the UPF. If the low-QoS original flow and the high-QoS error correction flow are consistent with information sent by the SMF, the access network device may send the low-QoS original flow and the high-QoS error correction flow to the SDK in the terminal device.

It should be understood that the data flow in FIG. 4 is transmitted from the AF to the terminal device, but this embodiment of this application is not limited thereto. Alternatively, the data flow may be transmitted from the terminal device to the AF.

For example, the SDK in the terminal device may split a data flow of service data into an original flow and an error correction flow, and determine a first QoS flow and a second QoS flow, to respectively transmit the original flow and the error correction flow to the access network device. After receiving indication information of the SDK, the wireless acceleration gateway determines the first QoS flow and the second QoS flow, and delivers QoS policy information to the SMF by using the PCF. The SMF delivers the QoS policy information to the UPF and the access network device. After receiving the original flow and the error correction flow, the access network device uses low QoS for a QoS flow corresponding to the original flow and uses high QoS for a QoS flow corresponding to the error correction flow based on the QoS policy information, obtains the low-QoS original flow and the high-QoS error correction flow, and sends the low-QoS original flow and the high-QoS error correction flow to the UPF. The UPF transmits the low-QoS original flow and the high-QoS error correction flow to the AF network element. It should be understood that this example is described only in an explicit manner, and this example is also applicable to an implicit manner. Details are not described herein again.

The data flow transmission method provided in this embodiment of this application only requires the SDK in the terminal device to support split transmission, so that dependency on an application layer is reduced. The wireless acceleration gateway can wirelessly accelerate data flow transmission, improve latency reliability of the data flow transmission, enhance connection stickiness of the wireless acceleration gateway, and open a transmission service-level agreement service.

In an optional embodiment, the first network element may be an AF network element, and the method 300 may further include: The first network element sends the QoS policy information to an SMF network element by using a PCF network element. Correspondingly, after receiving the QoS policy information, the SMF sends the QoS policy information to a UPF and an access network device.

The AF network element may determine the QoS policy information based on a QoS requirement, and send the QoS policy information to the SMF network element by using the PCF network element. The AF may divide a data flow of service data into an original flow and an error correction flow, determine a first QoS flow and a second QoS flow, and transmit the original flow and the error correction flow respectively. When the original flow and the error correction flow belong to a same service, the AF uses low QoS for a QoS flow corresponding to the original flow and uses high QoS for a QoS flow corresponding to the error correction flow based on QoS indication information.

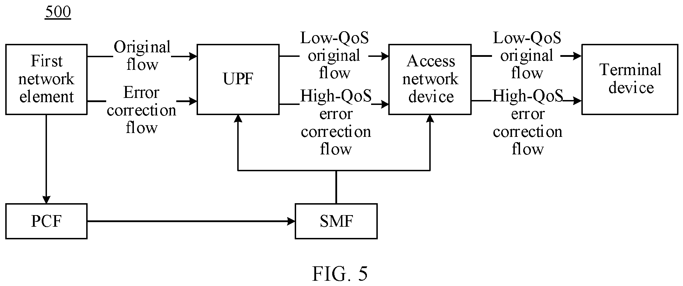

For example, FIG. 5 is a schematic diagram of a data flow transmission process. As shown in FIG. 5, two data flows may be transmitted between the AF network element and the UPF, between the UPF and the access network device, and between the access network device and a terminal device, that is, split transmission is supported.

If the AF network element transmits the data flow of the service data to the terminal device, the AF network element may divide the data flow of the service data into the original flow and the error correction flow, and send the QoS policy information to the SMF by using the PCF. After receiving the QoS policy information, the SMF sends the QoS policy information to the UPF and the access network device. After the UPF receives the QoS policy information, if the original flow and the error correction flow that are received from the AF network element meet a condition, the UPF uses the low QoS for the QoS flow corresponding to the original flow and uses the high QoS for the QoS flow corresponding to the error correction flow, obtains the low-QoS original flow and the high-QoS error correction flow, and sends the low-QoS original flow and the high-QoS error correction flow to the access network device. After the access network device receives the QoS policy information, if the original flow and the error correction flow that are received from the UPF meet a condition, the access network device sends the low-QoS original flow and the high-QoS error correction flow to the terminal device.

It should be understood that the data flow in FIG. 5 is transmitted from the AF network element to the terminal device, but this embodiment of this application is not limited thereto. Alternatively, the data flow may be transmitted from the terminal device to the AF network element.

For example, the terminal device may divide a data flow of service data into an original flow and an error correction flow, and send a flow identifier of the original flow, a flow identifier of the error correction flow, a service identifier of the original flow, and a service identifier of the error correction flow to the AF network element. The AF network element determines QoS policy information based on received information, and sends the QoS policy information to the SMF network element by using the PCF network element. The SMF network element sends the QoS policy information to the UPF network element and the access network device.

If the original flow and the error correction flow that are received from the terminal device meet a condition, the access network device uses low QoS for a QoS flow corresponding to the original flow and uses high QoS for a QoS flow corresponding to the error correction flow based on the QoS policy information, obtains the low-QoS original flow and the high-QoS error correction flow, and sends the low-QoS original flow and the high-QoS error correction flow to the UPF. If the original flow and the error correction flow that are received from the UPF meet a condition, the access network device sends the low-QoS original flow and the high-QoS error correction flow to the AF network element based on the QoS policy information.

In the transmission process shown in FIG. 5, in an RTC scenario, split transmission does not need to be supported between RTN nodes, and the split transmission needs to be supported only between uplink and downlink terminal devices and the RTN nodes.

According to the data flow transmission method provided in this embodiment of this application, intrusion into an application of the terminal device is avoided, the AF determines the QoS policy information, and in a split manner, splitting is performed at an IP layer or a transport layer. In addition, the error correction flow may be optimized in coordination with a wireless air interface, to improve latency reliability.

In an optional embodiment, the first network element may be a UPF network element. In S301, before the first network element determines the QoS policy information, the method 300 may further include: The first network element receives the QoS policy information from an SMF network element, where the first network element may determine the QoS policy information, and the first network element may further receive a data flow of service data from a wireless acceleration gateway, where the data flow of the service data includes an original flow of the service data and an error correction flow of the service data. The first network element marks QoS corresponding to the original flow of the service data as a low QFI, and marks QoS corresponding to the error correction flow of the service data as a high QFI based on the QoS policy information.

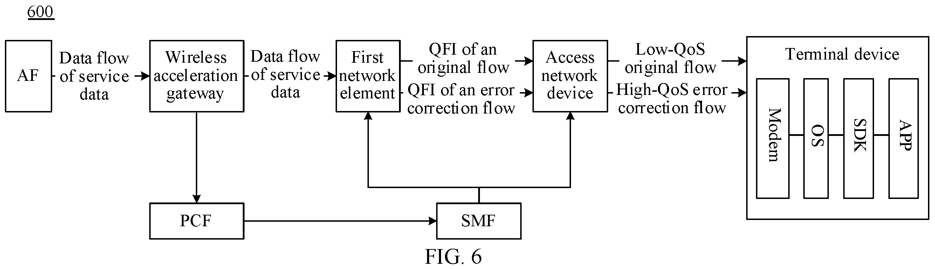

For example, FIG. 6 is a schematic diagram of a data flow transmission process. As shown in FIG. 6, one data flow is transmitted between an AF network element and the wireless acceleration gateway, and between the wireless acceleration gateway and a UPF network element. Two data flows may be transmitted between the UPF network element and an access network device, and between the access network device and a terminal device, that is, split transmission is supported. The terminal device may be specifically a modem in the terminal device, and transmission of two data flows may be implemented between the modem and the UPF network element through a wireless IP tunnel.

In this embodiment, both an explicit manner and an implicit manner are applicable. In the explicit manner, both the AF network element and the wireless acceleration gateway may send the QoS policy information to the SMF network element by using the PCF network element, and the SMF network element sends the QoS policy information to the UPF network element and the access network device. It should be understood that the figure does not show a case in which the AF sends the QoS policy information to the SMF.

In the implicit manner, both the AF and the wireless acceleration gateway may send QoS identifier information to the SMF network element by using the PCF network element, and the SMF determines the QoS policy information based on the identifier information, and sends the QoS policy information to the UPF and the access network device.

It should be understood that the wireless IP tunnel may establish a first QoS flow and a second QoS flow, and the first QoS flow and the second QoS flow may respectively belong to different protocol data unit (protocol data unit, PDU) sessions (sessions) or different QFIs in a same PDU session.

It should be further understood that in the terminal device, there is one data flow between an APP and an SDK, between the SDK and an OS, and between the OS and the modem.

After receiving the data flow of the service data transmitted by the wireless acceleration gateway, the UPF network element may add a QFI mark of the original flow to the first QoS flow and add a QFI mark of the error correction flow to the second QoS flow based on the QoS policy information. The access network device may use low QoS for a QoS flow corresponding to the original flow and use high QoS for a QoS flow corresponding to the error correction flow based on QFI information, obtain the low-QoS original flow and the high-QoS error correction flow, and send the low-QoS original flow and the high-QoS error correction flow to the modem in the terminal device.

Optionally, the UPF or the modem may perform splitting based on a sequence number of a to-be-retransmitted packet, and the sequence number of the to-be-retransmitted packet is less than or equal to a maximum sequence number of a latest packet sent by the UPF or the modem.

It should be understood that the data flow in FIG. 6 is transmitted from the AF to the terminal device, but this embodiment of this application is not limited thereto. Alternatively, the data flow may be transmitted from the terminal device to the AF. Details are not described herein again.

According to the data flow transmission method provided in this embodiment of this application, two QoS flows are established by the wireless tunnel, without depending on a server or the APP in the terminal device, so that intrusion into an application can be avoided, and wireless acceleration at a network layer can be implemented. This can improve latency reliability of the data flow transmission and increase an implementation probability.

The data flow transmission methods provided in the foregoing embodiments of this application may be further applied to transmission at a radio air interface layer (level, L) 2 in addition to the communication system 100.

For example, a dual radio link control (radio link control, RLC) or a dual media access control (media access control, MAC) link may be used for the L2 between the terminal device and the wireless access device. One L2 link uses a normal priority, and may be configured to improve a throughput. The other L2 link uses a high priority, and may be configured to perform error correction in wireless transmission.

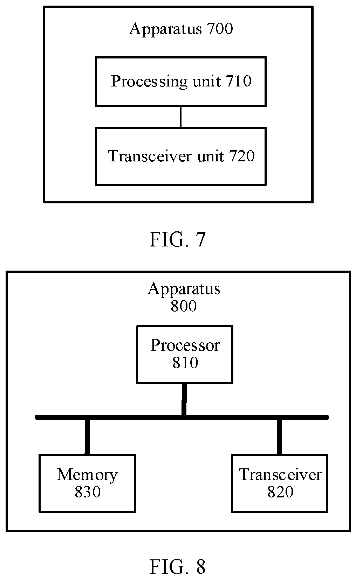

The foregoing describes in detail the data flow transmission methods in embodiments of this application with reference to FIG. 1 to FIG. 6. The following describes in detail data flow transmission apparatuses in embodiments of this application with reference to FIG. 7 and FIG. 8.

FIG. 7 shows a data flow transmission apparatus 700 according to an embodiment of this application. The transmission apparatus 700 may include a processing unit 710 and a transceiver unit 720. The processing unit 710 is configured to: determine a first QoS flow and a second QoS flow, where the first QoS flow is used to transmit an original flow of service data, and the second QoS flow is used to transmit an error correction flow of the service data; and determine QoS policy information, where the QoS policy information includes a flow identifier of the original flow, a flow identifier of the error correction flow, a service identifier of the original flow, a service identifier of the error correction flow, and QoS indication information, where the QoS indication information indicates a QoS flow corresponding to the original flow to use low QoS, and a QoS flow corresponding to the error correction flow to use high QoS. The transceiver unit 720 is configured to transmit the first QoS flow and the second QoS flow on two established transmission paths respectively based on the QoS policy information.

Optionally, the transceiver unit 720 is further configured to: receive first indication information from a terminal device or an edge access gateway, where the first indication information indicates the unit 720 to establish the transmission paths of the first QoS flow and the second QoS flow; and establish the transmission paths of the first QoS flow and the second QoS flow based on the first indication information, and establish a connection between the unit 720 and an AF network element, where the connection is used to transmit a data flow of the service data after wireless acceleration, and the data flow of the service data includes the original flow and the error correction flow.

Optionally, the transceiver unit 720 is further configured to send the QoS policy information to an SMF network element by using a PCF network element.

Optionally, the transceiver unit 720 is further configured to send identifier information to an SMF network element by using a PCF network element, where the identifier information includes the flow identifier of the original flow, the flow identifier of the error correction flow, the service identifier of the original flow, the service identifier of the error correction flow, and a QFI of the data flow of the service data.

Optionally, the transceiver unit 720 is further configured to send the QoS policy information to an SMF network element by using a PCF network element.

Optionally, the transceiver unit 720 is further configured to receive the QoS policy information from an SMF network element.

Optionally, the transceiver unit 720 is further configured to receive a data flow of the service data from a wireless acceleration gateway, where the data flow of the service data includes the first QoS flow and the second QoS flow; and the processing unit 710 is further configured to: add a QFI mark of the original flow to the first QoS flow, and add a QFI mark of the error correction flow to the second QoS flow based on the QoS policy information.

Optionally, the QFI of the original flow is an unacknowledged mode UM of a non-guaranteed bit rate nonGBR, and the QFI of the error correction flow is a guaranteed bit rate GBR.

Optionally, the first QoS flow and the second QoS flow belong to different network planes or network slices.

Optionally, the first QoS flow and the second QoS flow belong to a same network plane or network slice, and belong to different radio bearers.

Optionally, the error correction flow includes at least one of original data, to-be-retransmitted data, or redundant data of the service data.

The apparatus 700 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 700 may be specifically the first network element in the foregoing embodiments, or a function of the first network element in the foregoing embodiments may be integrated into the apparatus. The apparatus may be configured to perform procedures and/or steps corresponding to the first network element in the foregoing method embodiments. To avoid repetition, details are not described herein again.

The apparatus 700 has a function of implementing the corresponding steps performed by the first network element in the foregoing embodiments. The foregoing function may be implemented by hardware, or may be implemented by hardware executing corresponding software. The hardware or the software includes one or more units corresponding to the function. For example, the transceiver unit 720 may include a sending unit and a receiving unit. The sending unit may be configured to implement steps and/or procedures that are corresponding to the transceiver unit and that are used to perform a sending action, and the receiving unit may be configured to implement steps and/or procedures that are corresponding to the transceiver unit and that are used to perform a receiving action. The sending unit may be replaced with a transmitter, and the receiving unit may be replaced with a receiver, to separately perform receiving and sending operations and related processing operations in the method embodiments. For another example, the transceiver unit 720 may be replaced with a communication interface, to perform a transceiver operation in the method embodiments. In this embodiment of this application, the communication interface may be an apparatus that can implement a communication function, for example, a circuit, a unit, a bus, a bus interface, or a transceiver. It should be understood that the processing unit 710 in the foregoing embodiment may be implemented by a processor or a processor-related circuit, and the transceiver unit 720 may be implemented by a transceiver, a transceiver-related circuit, or an interface circuit.

Optionally, the apparatus in the foregoing possible design may further include a storage unit. The storage unit is configured to store a computer program. The processing unit 710 may invoke the computer program from the storage unit and run the computer program, to enable the apparatus 700 to perform the methods of the first network element in the foregoing method embodiments. This is not limited in this embodiment of this application.

In addition, the units in the foregoing embodiment may also be referred to as units, circuits, or components. In this embodiment of this application, the apparatus in FIG. 7 may alternatively be a chip or a chip system, for example, a system on chip (system on chip, SoC). Correspondingly, the transceiver unit may be a transceiver circuit of the chip. This is not limited herein.

FIG. 8 shows another data flow transmission apparatus 800 according to an embodiment of this application. The apparatus 800 includes a processor 810 and a transceiver 820. The processor 810 and the transceiver 820 communicate with each other through an internal connection path, and the processor 810 is configured to execute instructions, to control the transceiver 820 to send a signal and/or receive a signal.

Optionally, the apparatus 800 may further include a memory 830. The memory 830 communicates with the processor 810 and the transceiver 820 through an internal connection path. The memory 830 is configured to store instructions, and the processor 810 may execute the instructions stored in the memory 830. The apparatus 800 is configured to implement procedures and steps corresponding to the first network element in the foregoing method embodiments.

The apparatus 800 may be specifically the first network element in the foregoing embodiments, or may be a chip or a chip system. Correspondingly, the transceiver 820 may be a transceiver circuit of the chip. This is not limited herein. Specifically, the apparatus 800 may be configured to perform the steps and/or the procedures corresponding to the first network element in the foregoing method embodiments. Optionally, the memory 830 may include a read-only memory and a random access memory, and provide instructions and data to the processor A part of the memory may further include a non-volatile random access memory. For example, the storage may further store information about a device type. The processor 810 may be configured to execute the instructions stored in the memory, and when the processor 810 executes the instructions stored in the memory, the processor 810 is configured to perform the steps and/or the procedures corresponding to the first network element in the foregoing method embodiments.

In an implementation process, the steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware and software units in the processor. The software unit may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor. To avoid repetition, details are not described herein again.

It should be noted that, the processor in this embodiment of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field-programmable gate array (FPGA) or another programmable logic device, a discrete gate or a transistor logic device, or a discrete hardware component. The processor in this embodiment of this application may implement or perform methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by using a hardware decoding processor, or may be performed and completed by using a combination of hardware and software units in the decoding processor. The software unit may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the system and methods described in this specification includes but is not limited to these and any memory of another proper type.

According to the methods provided in embodiments of this application, this application further provides a computer program product. The computer program product includes computer program code. When the computer program code is run on a computer, the computer is enabled to perform the methods corresponding to the first network element.

According to the methods provided in embodiments of this application, this application further provides a computer-readable storage medium. The computer-readable storage medium has program code. When the program code is run on a computer, the computer is enabled to perform the methods corresponding to the first network element.

According to the methods provided in embodiments of this application, this application further provides a chip. The chip includes a processor, configured to read instructions stored in a memory. When the processor executes the instructions, the chip is enabled to implement the methods corresponding to the first network element.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of the embodiments.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data flow transmission method, comprising:
determining, by a first network element, a first quality of service QoS flow and a second QoS flow, wherein the first QoS flow is used to transmit an original flow of service data, and the second QoS flow is used to transmit an error correction flow of the service data;
determining, by the first network element, QoS policy information, wherein the QoS policy information comprises a flow identifier of the original flow, a flow identifier of the error correction flow, a service identifier of the original flow, a service identifier of the error correction flow, and QoS indication information, wherein the QoS indication information indicates a QoS flow corresponding to the original flow to use low QoS, and a QoS flow corresponding to the error correction flow to use high QoS; and
transmitting, by the first network element, the first QoS flow and the second QoS flow on two established transmission paths respectively based on the QoS policy information.

2. The method according to claim 1, wherein the first network element is a wireless acceleration gateway; and
the method further comprises:
receiving, by the first network element, first indication information from a terminal device or an edge access gateway, wherein the first indication information indicates the first network element to establish the transmission paths of the first QoS flow and the second QoS flow; and
establishing, by the first network element, the transmission paths of the first QoS flow and the second QoS flow based on the first indication information, and establishing a connection between the first network element and an application function AF network element, wherein the connection is used to transmit a data flow of the service data after wireless acceleration, and the data flow of the service data comprises the original flow and the error correction flow.

3. The method according to claim 2, wherein the method further comprises:
sending, by the first network element, the QoS policy information to a session management function SMF network element by using a policy control function PCF network element.

4. The method according to claim 2, wherein the method further comprises:
sending, by the first network element, identifier information to an SMF network element by using a PCF network element, wherein the identifier information comprises the flow identifier of the original flow, the flow identifier of the error correction flow, the service identifier of the original flow, the service identifier of the error correction flow, and a quality of service flow identifier QFI of the data flow of the service data.

5. The method according to any one of claims 2 to 4, wherein the wireless acceleration gateway is a multi-access edge platform MEP or a hybrid access gateway HAG.

6. The method according to claim 1, wherein the first network element is an application function AF network element; and
the method further comprises:
sending, by the first network element, the QoS policy information to an SMF network element by using a PCF network element.

7. The method according to claim 1, wherein the first network element is a user plane function UPF network element; and
the determining, by the first network element, QoS policy information comprises:
receiving, by the first network element, the QoS policy information from an SMF network element.

8. The method according to claim 7, wherein the method further comprises:
receiving, by the first network element, a data flow of the service data from a wireless acceleration gateway, wherein the data flow of the service data comprises the first QoS flow and the second QoS flow; and
adding, by the first network element, a QFI mark of the original flow to the first QoS flow, and adding a QFI mark of the error correction flow to the second QoS flow based on the QoS policy information.

9. The method according to any one of claims 1 to 8, wherein the QFI of the original flow is an unacknowledged mode UM of a non-guaranteed bit rate nonGBR, and the QFI of the error correction flow is a guaranteed bit rate GBR.

10. The method according to any one of claims 1 to 9, wherein the first QoS flow and the second QoS flow belong to different network planes or network slices.

11. The method according to any one of claims 1 to 9, wherein the first QoS flow and the second QoS flow belong to a same network plane or network slice, and belong to different radio bearers.

12. The method according to any one of claims 1 to 11, wherein the error correction flow comprises at least one of original data, to-be-retransmitted data, or redundant data of the service data.

13. A data flow transmission method, comprising:
determining, by a terminal device, a first quality of service QoS flow and a second QoS flow, wherein the first QoS flow is used to transmit an original flow of service data, and the second QoS flow is used to transmit an error correction flow of the service data;
determining, by the terminal device, QoS policy information, wherein the QoS policy information comprises a flow identifier of the original flow, a flow identifier of the error correction flow, a service identifier of the original flow, a service identifier of the error correction flow, and QoS indication information, wherein the QoS indication information indicates a QoS flow corresponding to the original flow to use low QoS, and a QoS flow corresponding to the error correction flow to use high QoS; and
transmitting, by the terminal device, the first QoS flow and the second QoS flow on two established transmission paths respectively based on the QoS policy information.

14. The method according to claim 13, wherein the terminal device is a software development kit SDK or a modem.

15. A data flow transmission apparatus, comprising:
a processing unit, configured to: determine a first quality of service QoS flow and a second QoS flow, wherein the first QoS flow is used to transmit an original flow of service data, and the second QoS flow is used to transmit an error correction flow of the service data; and determine QoS policy information, wherein the QoS policy information comprises a flow identifier of the original flow, a flow identifier of the error correction flow, a service identifier of the original flow, a service identifier of the error correction flow, and QoS indication information, wherein the QoS indication information indicates a QoS flow corresponding to the original flow to use low QoS, and a QoS flow corresponding to the error correction flow to use high QoS; and
a transceiver unit, configured to transmit the first QoS flow and the second QoS flow on two established transmission paths respectively based on the QoS policy information.

16. The apparatus according to claim 15, wherein the transceiver unit is further configured to:
receive first indication information from a terminal device or an edge access gateway, wherein the first indication information indicates the transceiver unit to establish the transmission paths of the first QoS flow and the second QoS flow; and
the processing unit is further configured to:
establish the transmission paths of the first QoS flow and the second QoS flow based on the first indication information, and establish a connection between the processing unit and an application function AF network element, wherein the connection is used to transmit a data flow of the service data after wireless acceleration, and the data flow of the service data comprises the original flow and the error correction flow.

17. The apparatus according to claim 16, wherein the transceiver unit is further configured to:
send the QoS policy information to a session management function SMF network element by using a policy control function PCF network element.

18. The apparatus according to claim 16, wherein the transceiver unit is further configured to:
send identifier information to an SMF network element by using a PCF network element, wherein the identifier information comprises the flow identifier of the original flow, the flow identifier of the error correction flow, the service identifier of the original flow, the service identifier of the error correction flow, and a quality of service flow identifier QFI of the data flow of the service data.

19. The apparatus according to claim 15, wherein the transceiver unit is further configured to:
send the QoS policy information to an SMF network element by using a PCF network element.

20. The apparatus according to claim 15, wherein the processing unit is further configured to:
receive the QoS policy information from an SMF network element.

21. The apparatus according to claim 20, wherein the transceiver unit is further configured to:
receive a data flow of the service data from a wireless acceleration gateway, wherein the data flow of the service data comprises the first QoS flow and the second QoS flow; and
the processing unit is further configured to:
add a QFI mark of the original flow to the first QoS flow, and add a QFI mark of the error correction flow to the second QoS flow based on the QoS policy information.

22. The apparatus according to any one of claims 15 to 21, wherein the QFI of the original flow is an unacknowledged mode UM of a non-guaranteed bit rate nonGBR, and the QFI of the error correction flow is a guaranteed bit rate GBR.

23. The apparatus according to any one of claims 15 to 22, wherein the first QoS flow and the second QoS flow belong to different network planes or network slices.

24. The apparatus according to any one of claims 15 to 22, wherein the first QoS flow and the second QoS flow belong to a same network plane or network slice, and belong to different radio bearers.

25. The apparatus according to any one of claims 15 to 24, wherein the error correction flow comprises at least one of original data, to-be-retransmitted data, or redundant data of the service data.

26. A data flow transmission apparatus, comprising:
a processing unit, configured to: determine a first quality of service QoS flow and a second QoS flow, wherein the first QoS flow is used to transmit an original flow of service data, and the second QoS flow is used to transmit an error correction flow of the service data; and
determine QoS policy information, wherein the QoS policy information comprises a flow identifier of the original flow, a flow identifier of the error correction flow, a service identifier of the original flow, a service identifier of the error correction flow, and QoS indication information, wherein the QoS indication information indicates a QoS flow corresponding to the original flow to use low QoS, and a QoS flow corresponding to the error correction flow to use high QoS; and
a transceiver unit, configured to transmit the first QoS flow and the second QoS flow on two established transmission paths respectively based on the QoS policy information.

27. The apparatus according to claim 26, wherein a terminal device is a software development kit SDK or a modem.

28. A data flow transmission apparatus, comprising a processor, wherein the processor is coupled to a memory, the memory is configured to store a computer program, and when the processor invokes the computer program, the apparatus is enabled to perform the method according to any one of claims 1 to 12.

29. A data flow transmission apparatus, comprising a processor, wherein the processor is coupled to a memory, the memory is configured to store a computer program, and when the processor invokes the computer program, the apparatus is enabled to perform the method according to either of claims 13 and 14.

30. A chip, comprising a processor, configured to read instructions stored in a memory, wherein when the processor executes the instructions, the chip is enabled to implement the method according to any one of claims 1 to 12.

31. A chip, comprising a processor, configured to read instructions stored in a memory, wherein when the processor executes the instructions, the chip is enabled to implement the method according to either of claims 13 and 14.

32. A computer-readable storage medium, wherein the computer-readable storage medium stores a computer program, and when the computer program runs on a computer, the method according to any one of claims 1 to 12 is performed.

33. A computer-readable storage medium, wherein the computer-readable storage medium stores a computer program, and when the computer program runs on a computer, the method according to either of claims 13 and 14 is performed.

34. A computer program product, wherein the computer program product comprises instructions, and when the instructions are executed, the method according to any one of claims 1 to 12 is performed.

35. A computer program product, wherein the computer program product comprises instructions, and when the instructions are executed, the method according to either of claims 13 and 14 is performed.
